# EUROPEAN PATENT APPLICATION

(11) **EP 3 418 554 A1**
(43) Date of publication of application: **26.12.2018**
(21) Application number: 16890760.8
(22) Date of filing: 25.11.2016
(51) Int. Cl.: F03B 13/18, E02D 5/80

(54) **BLOCK TYPE WAVE POWER GENERATION APPARATUS AND INSTALLATION METHOD THEREFOR**

(30) Priority: 18.02.2016 KR 20160019073
(71) Applicant: Ingine Inc., Seoul 02633 (KR)
(72) Inventor: SUNG, Yong Jun, Guri-si Gyeonggi-do 11952 (KR); CHO, Min Su, Seoul 04746 (KR); KIM, Jung Hee, Seoul 04758 (KR)
(74) Representative: Betten & Resch
(86) International application number: PCT/KR2016/013723
(87) International publication number: WO 2017/142169

(57) **Abstract**

A block type wave power generation apparatus of the present invention comprises: a floating unit for absorbing kinetic energy of waves and moored to the sea by a wire; a base unit for passing the wire extended from the floating unit therethrough and positioning the floating unit within a predetermined area of the sea; a power generation unit for transmitting kinetic energy of the floating unit from the wire passing through the base unit, and converting the kinetic energy into electrical energy.

## Description

### Technical Field

The present invention relates to a block type wave power generation apparatus that absorbs and converts kinetic energy of waves into electrical energy, and a method of installing the apparatus.

### Background Art

As energy consumption has been rapidly increased and environmental problems such as global warming have been increased, an interest in new and renewable energy not contaminating the environment has been increased.

A wave is a high-density energy source of new and renewable energy sources and attracts attention because it can be used 24 hours a day to generate power.

Technology about a wave power generation structure has been disclosed in Korean Patent No. 10-1260037, but this structure may be limited in energy harvesting efficiency and in seashore topography and water depth where the structure can be installed.

### Disclosure

### Technical Problem

The present invention makes it possible to achieve a wave power generation apparatus by connecting power generation units and base units in the same block types to simply install the power generation units connected to buoyant units through wires and the base units supporting the wires on the sea floor.

The present invention makes it possible to minimize the work of installing base units on the sea floor and makes it simple to carry and maintain the base units.

### Technical Solution

As an embodiment, a block type wave power generation apparatus includes: buoyant units moored on the sea by wires to absorb kinetic energy of waves; base units connected with the wires extending from the buoyant units and fixing the buoyant units within a predetermined section on the sea; and power generation units receiving kinetic energy of the buoyant units through the wires connected to the base units and converting the kinetic energy into electrical energy. The power generation units may be arranged on a ground or a breakwater.

As an embodiment, a method of installing the block type wave power generation apparatus includes: assembling the base units on land or on the sea; carrying the base units on a ship or on the sea to an installation area; sinking the base units in the sea at the installation area; fixing the base units on a sea floor at the installation area using weights; and connecting the buoyant units and the wires to the base units.

### Advantageous Effects

According to the block type wave power generation apparatus of the present invention, by forming main configurations into modules, initial installation and expansion and reduction of facilities can be easily achieved.

Since it is possible to achieve the block type wave power generation apparatus by connecting a plurality of same blocks, it is possible to standardize the specifications of the apparatus and to easily cope with an increase and a decrease of the capacity.

Since the power generation units can be arranged in a line on a breakwater, the buoyant units that receive wave force can also be arranged perpendicular to waves, so the input efficiency of wave force can be increased. Since the power generation units are connected to each other through a power cable, the efficiency of integrating energy can be increased.

The present invention makes it possible to minimize work for installing base unit on the sea floor and simply carry and maintain the base units.

### Description of Drawings

FIG. 1 is a perspective view showing a block type wave power generation apparatus of the present invention.
FIG. 2 is a side view showing the block type wave power generation apparatus of the present invention.
FIG. 3 is a block diagram showing a power generation unit of the present invention.
FIG. 4 is a block diagram showing an energy transmission process of the present invention.
FIG. 5 is a perspective view showing a method of installing a power generation unit of the present invention.
FIG. 6 is a perspective view showing a method of installing a base unit of the present invention.
FIG. 7 is a plan view showing a method of assembling a base unit of the present invention.
FIG. 8 is a block diagram showing another embodiment of the base unit of the present invention.
FIG. 9 is a side view showing a method of installing a base unit according to another embodiment of the present invention.
FIG. 10 is a perspective view showing a method of installing a base unit according to another embodiment of the present invention.
FIG. 11 is a view showing the position of a fixed pulley in a base unit of the present invention.
FIG. 12 is a view showing the position of a buoy-fixing point in a buoyant unit of the present invention.
FIGS. 13 and 14 are views showing the correlation between the fixed pulley and the buoy-fixing point.

### Mode for Invention

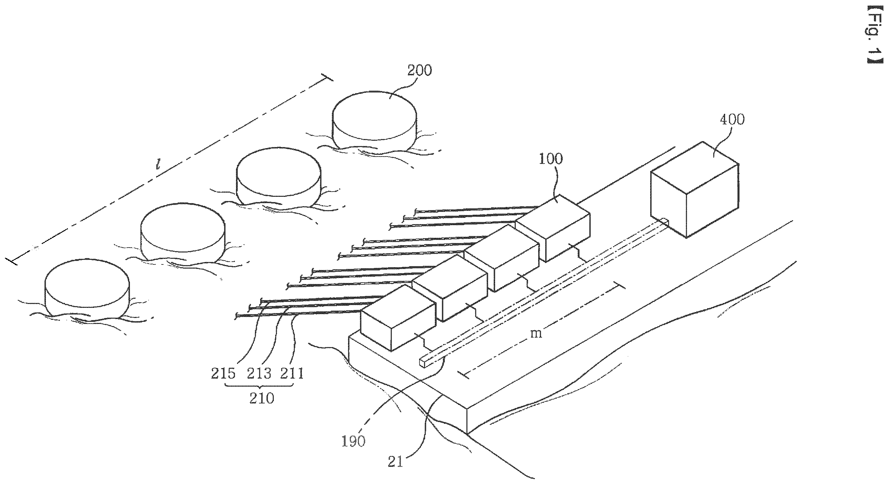

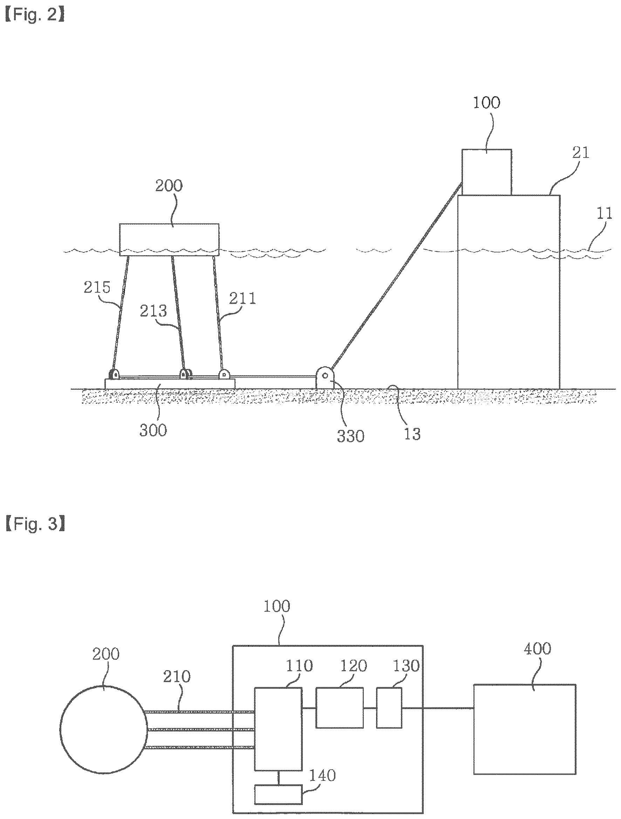

Hereafter, the configuration and function of a block type wave power generation apparatus of the present invention is described with reference to FIGS. 1 to 14.

A block type wave power generation apparatus of the present invention may include: buoyant units 200 absorbing kinetic energy of waves and moored on the sea by wires 210; base units 300 fixing the buoyant units 200 within a predetermined section on the sea; and power generation units 100 converting kinetic energy into electrical energy.

The buoyant units 200 are disposed on the sea level 11 and can generate translational or rotational motion due to a change of the sea level 11 due to waves. The translation and rotation energy of the buoyant units 200 can be transmitted to the power generation units 100 on land through the wires 210 connected to the buoyant units 200.

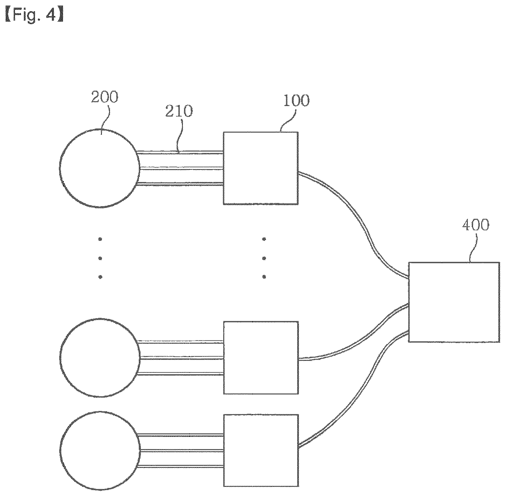

As shown in FIG. 4, the block type wave power generation apparatus of the present invention primarily absorbs wave force as kinetic energy of the buoyant units 200, transmits the kinetic energy to the power generation units 100 through the wires 210, and converts the kinetic energy into electrical energy through the power generation units 100, in which the energy that is output from the power generation units 100 is not mechanical energy, but electrical energy. Accordingly, it is possible to collect the output energy of the power generation units 100, using a power cable 190, and to collect electrical energy in a power integration unit 400 to which the power cable 190 is connected.

The buoyant units 200 can be moored within a predetermined section on the sea by the wires 210. Since the buoyant units 200 are moored by the wires 210, they cannot move out of a predetermined area from predetermined positions on the sea. According to the block type wave power generation apparatus of the present invention, since the floating wires 200 are moored by the wires 210, it is possible to reduce costs for the initial installation and construction, as compared with other file type, self-weight type, and jacket type ocean facilities

The buoyant units 200 primarily absorbing wave energy as mechanical energy are floated on the sea, so they can move up/down and left/right and can rotate with movement of waves.

First ends of the wires 210 may be connected to the buoyant units 200 and connected to the power generation units 100 on land or a marine structure such as a breakwater through the base units 300 under the sea. For example, the portions where the wires 210 are connected to the base units 300 may be fixed pulleys and the base units 300 are fixed on the sea floor 13 and changes the directions of the wires 210.

Three or more wires 210 may be connected to each of the buoyant units 200. Since three or more wires 210 are connected, the multi-degree of freedom kinetic energy of the buoyant units 200 can be fully absorbed through the wires 210. The block type wave power generation apparatus of the present invention can absorb translation energy on three axes perpendicular to one another in a 3D space and rotation energy about the three axes.

Virtual axes for rotation of the buoyant units 200 are hereafter referred to as rotational axes of the buoyant units 200. The rotational axes of the buoyant units 200 are axes that are not fixed and are moved with the status of waves. For example, rolling, pitching, and yawing that are rotational motion about the three axes other than translation of the buoyant units 200 are defined as rotation of the buoyant units 200 or the resultant force of two or more of rolling, pitching, and yawing is defined as rotation of the buoyant units 200. A rotational axis for rotation of the buoyant units 200 may exist at a specific moment and it defined as a rotational axis of the buoyant units 200 for the convenience of description. The rotational axes of the buoyant units 200 are virtual axes.

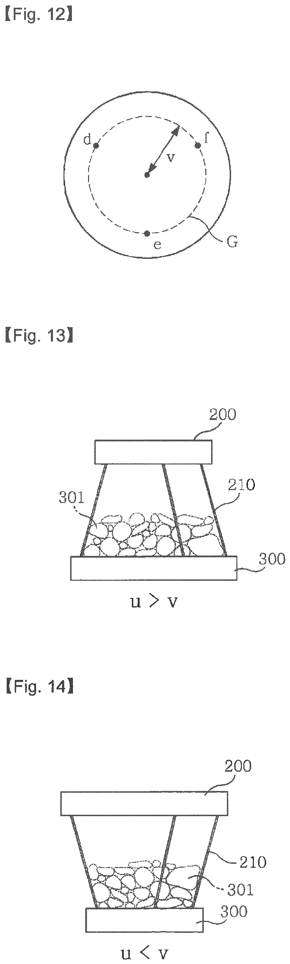

As shown in FIG. 12, in order to effectively absorb multi-degree of freedom kinetic energy, buoy-fixing points d, e, and f where the wires 210 are fixed to the buoyant unit 200 may be spaced apart from each other. Since the buoy-fixing points d, e, and f are spaced apart from each other, the buoyant unit 200 can absorb all translational or rotational motion energy of x-axial/y-axial/z-axial translational motions and rotational motions about x-axis/y-axis/z-axis. Preferably, since three of more buoy-fixing points d, e, and f are not positioned in a straight line, multiple-degree of freedom can be absorbed.

As a virtual comparative embodiment that is not the present invention for describing the present invention, if a plurality of buoy-fixing points d, e, and f are collected at one point, it is impossible to absorb all of x-axial/y-axial/z-axial translational motion energy or rotational motion energy about x-axis/y-axis/z-axis. In this case, if the buoy-fixing points are positioned on the rotational axes, even if the buoyant unit 200 is rotated, there is no change in tension in the wires 210, so energy cannot be absorbed.

In order to solve this problem, a plurality of buoy-fixing points d, e, and f are spaced a predetermined distance apart from one another in the present invention. As an embodiment, even if a virtual center axis for rotational motion of the buoyant unit 200 passes at least one of the buoy-fixing points d, e, and f, the other ones of the buoy-fixing points d, e, and f are positioned out of the center axis of the rotational motion. Accordingly, the wires 210 fixed to the buoy-fixing points d, e, and f out of the center axis of rotational motion can be changed in tension or can transmit energy.

On the other hand, the wavelengths of waves are not uniform, but changed as time passes. In the present invention, a structure that can absorb all of x-axial/y-axial/z-axial translational motions and rotational motions about x-axis/y-axis/z-axis as energy regardless of the wavelengths of waves.

When the wavelength of a wave is larger than the diameter of the buoyant unit 200, it is preferable to absorb energy as translational motion rather than rotational motion of the buoyant unit 200. When the wavelength is smaller than the diameter of the buoyant unit 200, it is preferable to absorb energy as rotational motion rather than translational motion of the buoyant unit 200. As described above, it is efficient to absorb rotational motion in some cases and translational motion in some cases, depending on the wavelengths. In order to improve homeostasis of the amount of power generation, the characteristic of connecting a plurality of wires 210 to one buoyant unit 200 and the characteristic of spacing the fixing points of the wires 210 apart from one another on the buoyant unit 200 make it possible to absorb energy of multiple-degrees of freedom for both of rotational motion and translational motion regardless of the size of the buoyant unit 200.

For example, the buoyant unit 200 rises to the peak of a wave when the wavelength of the wave is double to diameter of the buoyant unit 200, and then the buoyant unit 200 move down as the wave passes, whereby it is possible to absorb vertical motion at a higher ratio. When the wavelength is smaller than the diameter of the buoyant unit 200, it is possible to absorb a change in slope or rotational motion of the buoyant unit 200 at a higher ratio.

Since the wires 210 are spaced predetermined distances apart from one another, it is possible to remarkably increase the efficiency of power generation, the degrees of freedom for power generation, homeostasis of the amount of power generation, adaptation to the environment, and correspondence to a change of waves.

On the other hand, the power generation units 100 can convert kinetic energy transmitted as tension in the wires 210 from the buoyant units 200 into electrical energy. The power generation units 100 can be connected with the buoyant units 200 through the wires 210. The power generation units 100 of the present invention are blocks having the same structure, so expansion is easy. A plurality of buoyant units 200 may be connected to one power generation unit 100 or one buoyant unit 200 may be connected to a plurality of power generation units 100.

Further, some of the wires 210 of a plurality of buoyant units 200 may be connected to one power generation unit 100 and some wires 210 may be connected to another power generation unit 100.

That is, when a plurality of wires 210 connected to a buoyant unit 200 are a first wires 211, a second wire 213, and a third wire 215, the first wire 211 of the buoyant unit 200 may be connected to a power generation unit 100, the second wire 213 may be connected to another power generation unit 100, and the third wire 215 may be connected to another power generation unit 100. Alternatively, the first wire 211, the second wire 213, and the third wire 215 connected to one buoyant unit 200 may be connected to one power generation unit 100, or n wires 210 connected to several buoyant units 200 may be connected to one power generation unit 100.

In the connection relationships among the buoyant units 200, the power generation units 100, and the wires 210, the physical distance between the buoyant units 200 and the power generation unit 100 and the average tension and the cycle of tension in the wires 210 may be considered. It is possible to minimize the installation costs and maximize power generation efficiency by optimizing the scale and structure of the facility.

A plurality of power generation units 100 may be formed in a module. For wave power generation, a wave farm may be formed and a plurality of harvesting structures may be constructed in a wide area on the sea. This is because the area that comes in contact with a wave (the width of a wave) is proportioned to the amount of energy to be absorbed. In detail, when the wave width is 1m, the wave force is proportioned to a square of a wave height and the cycle of waves and is expressed in kW/m. That is, it is possible to harvest more energy in proportion to the width of a wave when absorbing kinetic energy of a wave having a large width. The block type wave power generation apparatus of the present invention uses the buoyant units 200 in a harvesting structure and the buoyant units 200 may be arranged perpendicular to the progression direction of waves. Since the buoyant units 200 are arranged perpendicular to the progression direction, they face the large width of waves, thereby increasing the amount of energy to be harvested.

The sizes of the buoyant units 200 are determined in consideration of the wavelengths of waves, so the sizes can be appropriately determined, depending on the wavelengths of waves, but if the sizes are infinitely increased, power generation efficiency may be deteriorated. Accordingly, it may be possible to arrange a plurality of buoyant units 200 having appropriate sizes perpendicular to the progression direction of waves in order to observe wave force with high efficiency.

When a plurality of buoyant units 200 are arranged in large width, it may be inefficient to connect all of the buoyant units 200 to one power generation unit 100. Accordingly, a plurality of power generation units 200 is provided and may be arranged in a plurality line in parallel with the buoyant units 200.

The progression direction and the progression width of waves may be changed in real time in accordance with seasons and climates and the power generation units 100 and the buoyant units 200 are respectively modulated, so, in the block type wave power generation apparatus of the present invention, facilities can be easily added and removed. Further, it is possible to easily add and remove facilities in accordance with a change in demand for electricity by wave power generation regardless of the state of waves.

As shown in FIG. 1, the length 'ι' of the arrangement of a plurality of buoyant units 200 may be in proportion to the length 'm' of the arrangement of a plurality of power generation units 100.

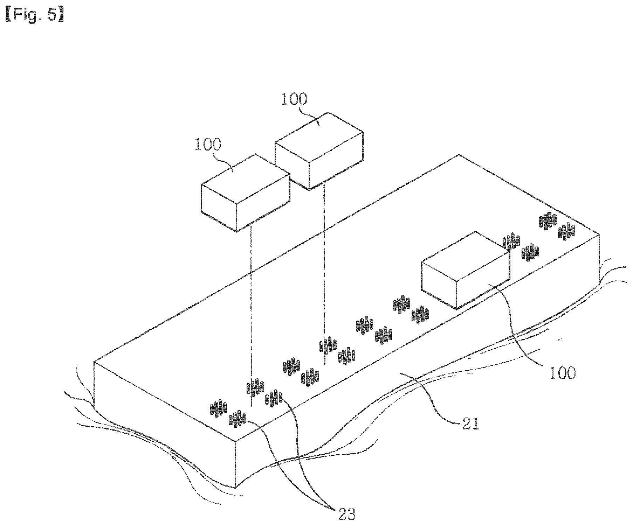

For example, as shown in FIG. 5, power generation units 100 may be coupled and fixed to anchor bolts 23 on support blocks 21a. The anchor bolts 23 may protrudes from the support blocks 21a. The power generation units 100 can be easily coupled to and decoupled from the support blocks 21a. The anchor bolts 23 or the support blocks 21a may be arranged uniformly on a breakwater 21. The power generation units 100 may be fixed to the breakwater 21 selectively by some of the anchor bolts 23 and the anchor bolts 23 can be selected in consideration of the positional relationship between the power generation units 100 and the buoyant units 200.

The power generation unit 100 may include a power converter 110 converting tension in the wires 210 into rotational motion, a balancer 140 storing some of the tension in the wires 210 as potential energy or elastic energy, a generator 120 converting energy obtained by the power converter 110 into electrical energy, and a converter 130 converting the electricity of the generator 120 into AC or DC electricity.

The power converter 110 includes wire drums (not shown) for winding the wires and the wire drums (not shown) can be wound or unwound in accordance with a change in tension in the wires 210 due to motion of the buoyant unit 200. The wire drums (not shown) have one-way clutches, so they can rotate only in the same direction.

The power converter 110 can convert the tension in the wires 210 into rotational motion using the wire drums (not shown) and can transmit the rotational motion to the generator 120. When the wires 210 are pulled by the buoyant unit 200, tension is generated in the wires 210. When kinetic energy is input to the power converter 110 from the buoyant unit 200, the buoyant unit 200 pulls the wires 210, so the wire drums (not shown) can be rotated in the unwinding direction of the wires 210. When the tension in the wires 210 is removed, the wire drums (not shown) can be rotated in the winding direction of the wires 210 by returning members that rewind the wires 210 on the wire drums (not shown).

It is assumed hereafter that when tension is generated in the wires 210 and the wire drums (not shown) are rotated in the unwinding direction of the wires 210, it is a first rotational direction, and when the tension in the wires 210 is removed and the wire drums (not shown) is rotated in the winding direction of the wires 210 (opposite to the first direction), it is a second rotational direction.

A balancer 140 can store some of tension in the wires 210 as potential energy or elastic energy using a spring or a weight. In the case of potential energy, it can be stored as the difference in height of the weight moving up and down, and in the case of elastic energy, it can be stored as the difference in length of the spring.

The balancer can balance energy to be generated by transmitting torque to the generator 120 when tension in the wires 210 is removed. Tension is repeatedly and periodically generated and removed in the wires in accordance with motion of the buoyant unit 200. Accordingly, the power converter 110 can provide torque to the generator 120 when tension is generated in the wire 210 and the balancer 140 can provide torque to the generator 120 when tension in the wires 210 is removed.

When tension in the wires 210 is removed in accordance with motion of the buoyant unit 200, it is required to wind back the wires 210 by rotating the wire drums (not shown) of the power generation unit 100 in the second rotational direction. In this case, it is possible to rotate the wire drums (not shown) in the second rotational direction using the potential energy accumulated in the balancer 140.

The power generation unit 120 can convert the torque input from the power converter 110 or the balancer 140 into electrical energy. The generator 120 may be a generator including a stator and a rotor.

The converter 130 can convert the electricity transmitted from the generator 120 into AC or DC power. The block type wave power generation apparatus of the present invention can integrally manage power by sending the electricity generated by the power generation units 100 to the power integration unit 400. The power integration unit 400 is connected with the power generation units 100 through a conductive cable 190, so it can collect and manage generated power. Accordingly, since the electricity generated by the power generation units 100 is collected and then sent, the converter 130 can convert the generated electricity into AC power that is advantageous in delivery. Furthermore, the converter 130 can convert the AC power produced by the generator 120 into DC power and the power generation units 100 can output and transmit the DC power to the power integration unit 400.

The gear structure of the power converter 110 of the power generation unit 100, the elasticity and weight of the spring and the weight of the balancer 140, and the electrical specifications of the generator 120 and the converter 130 may depend on the magnitude and cycle of the tension that is generated in the wires 210. That is, the specifications of the power generation units 100 may depend on the state of tension in the wires 210. Accordingly, in the present invention, a plurality of power generation units 100 that can cope with various states of tension in the wires 210 may be provided and wires 210 having similar state of tension may be grouped and connected to power generation units 100 having specifications suitable for the state of tension in the wires 210. Even the wires 210 connected to one buoyant unit 200 may transmit tensions having different characteristics and power generation efficiency can be maximized by connecting the wires 210 to power generation units 100 that are optimal to the wires 210, respectively.

The base units 300 each have several fixed pulleys 330, so it is possible to install several fixed pulleys 330 on the sea floor by sinking the base units into the sea at a time. That is, it is possible to fix several fixed pulleys 330 as one assembly to the base unit 300 by assembling base unit 300 on land or on a ship without fixing the fixed pulleys 330 one by one. In order to install the base unit 300 on the sea floor, the base unit 300 is not fixed to the sea floor through specific work, but is sunk into the seat by its weight, whereby the base unit 300 having the fixed pulleys 330 can be fixed at a predetermined position on the sea floor.

The base unit 300 can be fixed at a point on the sea floor and can moor a buoyant unit 200 within a predetermined section. The specific gravity of the base unit 300 that is sunk and fixed on the sea floor may be larger than that of the seawater.

The base units 300 are arranged on the sea floor and can be fixed at predetermined positions on the sea floor 13 by there weight.

The base unit 300 may have a frame 305 forming the framework, and the fixed pulleys 330 fixed to the frame 305 and supporting wires 210 such that the wires 210 can be moved.

The base unit 300 is sunk in the sea and an object such as a riprap having high specific gravity is put on the frame of the base unit 300, whereby the base unit 300 can be fixed on the sea floor by the weight.

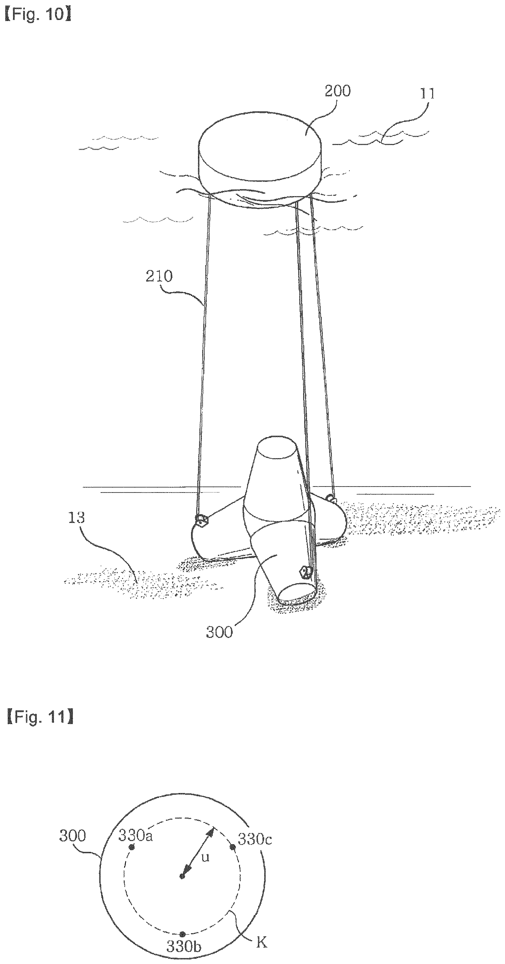

Preferable positions of the buoy-fixing points d, e, and f on the buoyant unit 200 and the fixed pulleys 330a, 330b, and 330c on the base unit 300 are described with reference to FIGS. 11 to 14.

When a virtual closed curve connecting a plurality of fixed pulleys 330a, 330b, and 330c on the base unit 300 is k and a virtual closed curve connecting a plurality of buoy-fixing points d, e, and f on the buoyant unit 200 is g, the size of the virtual curves k and g may be different such that when tension is generated in any one wire 210, tension in the other wires 210 is removed.

For example, as shown in FIGS. 11 and 12, it is assumed that a virtual circle having an arc connecting a plurality of fixed pulleys 330a, 330b, and 330c on the base unit 300 is k and a virtual circle having an arc connecting buoy-fixing points d, e, and f on the buoyant unit 200 is g. The diameters of the circles k and g are u and v, respectively.

When the diameters u and v are larger or smaller than each other (are not the same), when tension is generated in one wire 210, tension in the other wires 210 is removed. Accordingly, tension is alternately generated, so the wires 210 can alternately absorb energy in one motion cycle.

However, when the diameters u and v are the same, tension is simultaneously generated or removed by translational motion of the buoyant unit 200, so there may be a need for a specific structure that can variously distribute the point of time of energy absorption. Accordingly, it is preferable that the diameters u and v are different, considering energy absorption of multiple-degrees of freedom or improvement of energy absorption efficiency. The difference between the diameters u and v may depend on the wavelength and height of a wave and the depth of the sea floor 13.

The wires 210 connecting the buoy-fixing points d, e, and f and the fixed pulleys 330a, 330b, and 330c, respectively, can make on obtuse angle or an acute angle with the sea level 11 or the sea floor 13. That is, when the first wire 211, the second wire 213, and the third wire 215 are connected respectively to the three buoy-fixing points d, e, and f spaced apart from one another, it is possible to absorb kinetic energy of multiple-degrees of freedom. When the angles of the first wire 211, the second wire 213, and the third wire 215 respectively connecting the buoy-fixing points d, e, and f and the fixed pulleys 330a, 330b, and 330c are different, when tension in a wire 210 is removed, tension is generated in another wire 210, so the point of time of energy absorption can be variously distributed and it is possible to absorb energy of multiple-degrees of freedom and improve energy absorption efficiency.

When tension is generated in the first wire 211, tension in the second wire 213 is removed, so tension can be alternately generated in the first wire 211 and the second wire 212 connected to the buoy-fixing points at different angles. It is possible to continuously absorb energy by making the extension angles of the first wire 211 and the second wire 213 extending from the fixed pulleys 330 to the buoyant unit 200 and the power generation unit 100 different.

For example, three or more buoy-fixing points, where wires 210 are fixed to a buoyant unit 200, are provided and the three or more buoy-fixing points d, e, and f are spaced apart from one another not the positioned in one line. The wires 210 extending from the buoy-fixing points d, e, and f may be connected to at least some of the fixed pulleys 330a, 330b, and 330c on the base unit 200. It is preferable that the angles of the wires 210 extending from the fixed pulleys 330a, 330b, and 330c changing the directions of the wires to the buoyant unit 200 and the power generation unit 100 are different.

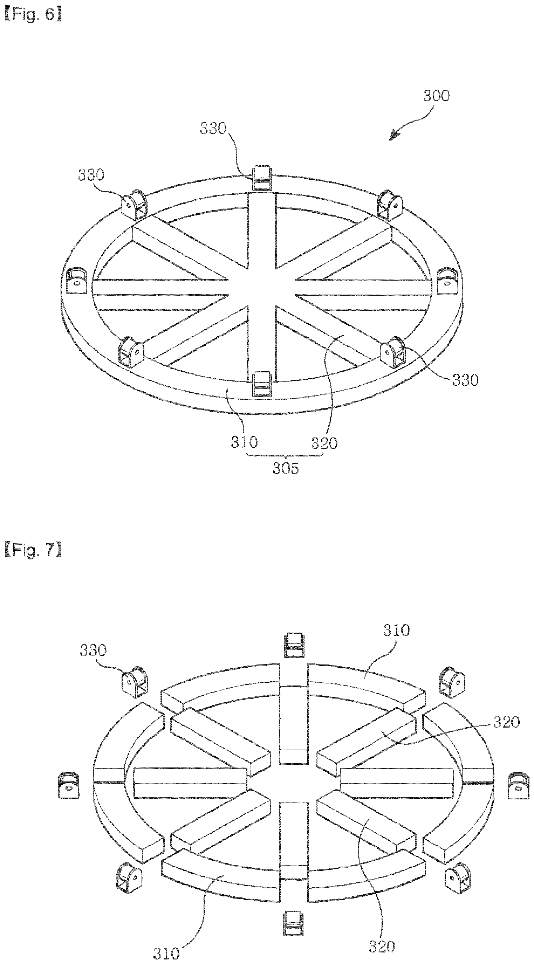

As shown in FIG. 6, the frame 305 of the base unit 300 may include a main frame 310 to which the fixed pulleys 330 are fixed and a sub-frame 320 on which an object such as a riprap is placed. In the fixed pulleys 330, optimal fixed pulleys 330 can selectively pass the wires 210 in consideration of the motion state of the buoyant unit 200. The fixed pulleys 330 can change the directions of the wires 210 wound thereon.

As shown in FIG. 7, the base unit 300 may be an assembly. The base unit 300 may be formed by combining a plurality of main frames 310, sub frames 320, and fixed pulleys 330. The main frames 310, the sub-frames 320, and the fixed pulleys 330 can be easily attached/detached, so the base unit 300 can be easily expanded/contracted and easily carried.

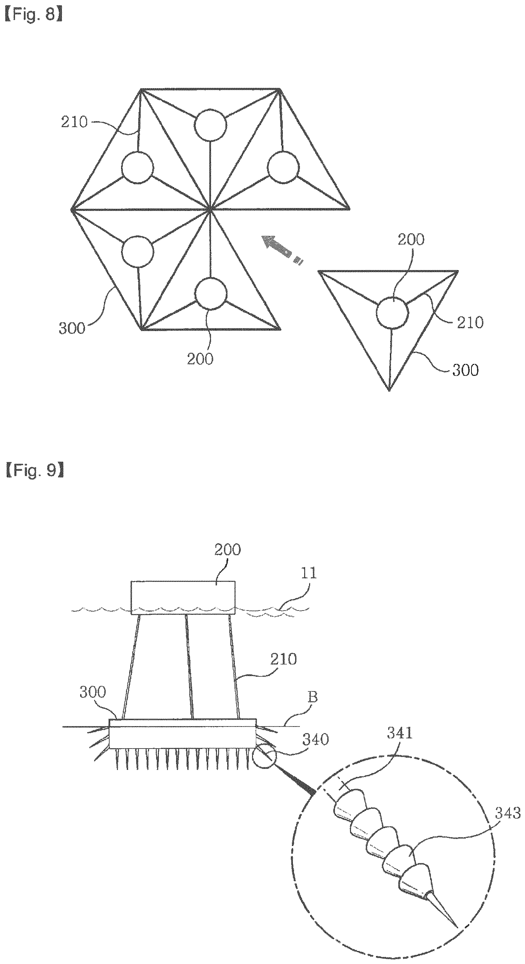

As shown in FIG. 8, a plurality of base units 300 can be combined. When a plurality of base units 300 is combined, the total load is increased, so they can be more firmly fixed to the sea floor 13.

As shown in FIG. 9, the base unit 300 may have sticking legs 340 protruding outward from the base unit 300.

As an embodiment, the sticking legs 340 protruding outward from the sides and the bottoms of the base unit 300 may be anchors or jackets that are inserted into a sandbank without stoppers 343. The sticking legs 340 may be any one of anchors, files, and jackets, and the types of the jackets may be all of the types that are used in engineering works.

As an embodiment, the sticking legs 340 each have a sticking rod 341 that is a central shaft and the stoppers 343 protruding from the sticking rod 341. The stoppers 343 may protrude from an anchor, a file, or a jacket. In this case, the base unit can be more firmly fixed to a sandbank and a change of a position due to sinking into the sandbank can be reduced.

As an embodiment, a side of the stopper 343 is fixed to the sticking rod 341 and the other side of the stopper 343 extends in the opposite direction to the direction in which the sticking rod 341 is inserted into the sea floor. The stoppers 341 are spaced apart from one another on the sticking rod 341. When the base unit 300 is installed on a soft ground such as a sandbank, the sticking legs 340 are easily inserted, but excessive sinking of the sticking legs 340 can be prevented by the stoppers 343 on the sticking legs 343, so the base unit 300 can be stably maintained at a predetermined position on a sandbank.

As shown in FIG. 10, a tetrapod may be used as the base unit 300. The tetrapod is supported at three points on the sea floor 13 (in point contact between the ends of the legs of the tetrapod and the sea floor 13), so it can be easily fixed on any shapes of grounds without additional work such as leveling an uneven configuration of the sea floor. The tetrapod provides several spaces that can be habitats of fishes, so it can function as an artificial fish-breeding ground.

The base unit 300 can be composed of separate parts. The base unit 300 can be formed by combining the parts. Since the base unit 300 is formed by combining a plurality of parts, it is possible to manufacture the parts on land, carry them on a barge, assemble the base unit, and then sink it onto the sea floor 13. The base unit 300 may be composed of parts having dimensions suitable for the situation under the sea.

The base unit 300 may have a frame 305 forming the framework and fixed pulleys 330 that wires 210 movably pass.

The frame 305 may include a main frame 310 to which the fixed pulleys 330 are fixed and a sub-frame 320 that weights such as ripraps, sand, and gravels are inserted in or placed on. Supporting portions that support weight on the sea floor may be formed at the sub-frame 320 or the main frame 310. Pluralities of main frames 310, sub-frames 320, and fixed pulleys 330 are provided and the base unit 300 can be formed by combining separate modules having the same shape and structure.

The main frames 310 can form the framework of the base unit 300. The main frames 310 may be a rod, a rectangular parallelepiped, or a disc shape to be suitable for the situation under the sea.

The sub-frames 320 are combined with the main frames 310, whereby weights 301 such as ripraps, sand, and gravels that can apply load to the entire base unit 300 can be loaded thereon. The sub-frames 320 can maximally secure an area in which the base unit 300 is perpendicular to the sea level 11.

As the weights 301 such as ripraps and concrete are placed on or inserted in the base unit 300, the base unit 300 can be fixed to the sea floor. A space or an area where the weights 301 can be placed can be secured by the sub-frames 320.

In the supporting portions, an end may be fixed to the main frame 310 or the sub-frame and the other end may extend to the sea floor perpendicular to the sea level. The length of the supporting portions depend on the topography of the sea floor, so the base unit 300 can be supported on the sea floor by the supporting portions without specific work for uneven grounds.

A method of installing a base unit 300 is described in detail hereafter.

A method of installing a block type wave power generation apparatus of the present invention includes: assembling a base unit 300 on the ground or on a ship; carrying the base unit 300 to an installation area on a ship or on the sea; sinking the base unit 300 in the installation area; and fixing the base unit 300 with weights 301. The method may further include connecting a buoyant unit 200 and wires 210.

In the assembling of the base unit 300 on land or a ship, the base units 300 may be manufactured in consideration of the topography of the sea floor that is examined in advance. The main frames 310 or the sub-frames 320 can be assembled to fit the installation area in consideration of the topography of the sea floor and the lengths of the supporting portions can be adjusted in accordance with the depth of the sea floor.

As an embodiment, the buoyant unit 200 and the wires 210 can be connected to the base unit 300 in at least one of the sinking, fixing, and connecting. The present invention is not limited thereto and the buoyant unit 200 and the wires 210 may be connected to the base unit 300 on land or a ship to minimize work on the sea floor. As an embodiment, in the assembling, the buoyant unit 200 and the wires 210 may be connected to the base unit 300.

The wires 210 each may be fixed to the buoyant unit 200 with an end passing through a fixed pulley 330 on the base unit 300. The buoyant units 200 may be directly coupled to the base unit 300 or may be indirectly coupled to the base unit 300 through the wires 210. The direct coupling can be removed in the sinking of the base unit 300.

In the carrying of the base unit 300 to the installation area, the base unit 300 may be carried on a ship. It may be possible to float the base unit 300 on the sea using the buoyant unit 200 or other buoys, connect them to a ship with a rope, and then carry them to the installation area on the sea.

In the sinking of the base unit 300 in the installation area, it may be possible to disconnect the buoyant unit 200 or other buoys connected to the base unit 300 and then sink the base unit 300. It is possible to finely adjust the position of the base unit 300 while the base unit 300 sinks in the sea.

In the fixing of the base unit 300 with weights 301, the weights 301 may be placed on the base unit 300 or may be inserted in a space inside the base unit 300. The weights 301 may be net bags with ripraps therein. The weights 301 may be sand or gravels and may be materials having specific gravity larger than that of water.

As another embodiment, a method of installing a plurality of base units 300 may be as follows. The method may include carrying base units 300, combining the base units 300 into a group, and sinking the group of the base units 300.

In the combining of the base units 300 into a group, the base units 300 may be connected by ropes such as chains or by hooks formed in advance on the frames 305. By sinking the base units 300 in a group, influence by external shaking can be minimized. Further, the base units 300 can be firmly fixed on the sea floor after they are installed.

As another embodiment, a method of installing a base unit 300 using a tetrapod may be as follows. The method may include sinking a tetrapod and connecting first ends of wires 210 to a buoyant unit 200 and another end to a power generation unit 100.

In the sinking of a tetrapod, the first ends and second ends of the wires 210 may be fixed to a ship not to sink in the sea. By sinking only the tetrapod connected between the first ends and second ends of the wires 210, the middle portions of the wires sink through fixed pulleys 330 on the base unit 300, so the ends can be easily connected on the sea without working underwater.

## Claims

1. A block type wave power generation apparatus comprising:
buoyant units moored on the sea by wires to absorb kinetic energy of waves;
base units connected with the wires extending from the buoyant units and fixing the buoyant units within a predetermined section on the sea; and
power generation units receiving kinetic energy of the buoyant units through the wires connected to the base units and converting the kinetic energy into electrical energy, wherein the power generation units are arranged on a land or a breakwater.

2. The apparatus of claim 1, wherein a plurality of modules of the base units is arranged on the sea floor and fixed at predetermined positions on the sea floor by their weight.

3. The apparatus of claim 1, wherein at least three or more buoy-fixing points where the wires are fixed are provided on the buoyant unit,
the buoy-fixing points are spaced apart from one another not to be positioned on the same straight line,
the wires extending from the buoy-fixing points are connected to at least some of a plurality of fixed pulleys on the base unit, and
when the wires are turned at the fixed pulleys, angles of the wires opening toward the base unit and the power generation unit are different.

4. The apparatus of claim 1, wherein when a virtual closed curve connecting a plurality of fixed pulleys on the base unit is k and a virtual curved line connecting a plurality of buoy-fixing points on the base unit is g, the closed curves are different in size such that when tension is generated in any one of the wires, tension in another one wire is removed.

5. The apparatus of claim 1, wherein the power generation units are arranged in parallel with an arrangement direction of the buoyant units, and a length of the arrangement of the power generation units is proportioned to a length of the arrangement of the buoyant units.

6. The apparatus of claim 1, wherein a plurality of supporting blocks having anchor bolts are disposed on the land or the breakwater,
the power generation units are fastened to some selected from the anchor bolts,
the anchor bolts are selected in accordance with positional relationships between the power generation units and the buoyant units, and
the power generation units can be separated from the supporting blocks.

7. The apparatus of claim 1, further comprising a power integration unit receiving electrical energy output from the power generation unit through cables and integrating the energy output from the power generation units.

8. The apparatus of claim 1, wherein the base units include a frame forming a framework and fixed pulleys that the wires movably pass, and
the frames and the fixed pulleys are combined with each other, thereby forming the base units.

9. The apparatus of claim 1, wherein the base units include a base unit to which the fixed pulleys are fixed and a sub-frame that weights including at least one of ripraps, sand, and gravels are inserted in or placed on.

10. The apparatus of claim 1, wherein the base units are separably combined with each other.

11. The apparatus of claim 1, wherein the base unit has sticking legs extending outward from the base units and the sticking legs include at least any one of anchors, jacket, and files.

12. The apparatus of claim 1, wherein the base unit has sticking legs extending outward from the base unit and stoppers protruding outward from the sticking legs.

13. The apparatus of claim 1, wherein the base unit includes a tetrapod supported at three points on a sea floor and fixed pulleys are fixed to the tetrapod.

14. The apparatus of claim 1, wherein the base unit is formed by combining separate parts, and
the parts of the base unit are carried on a ship or on the sea from the ground and then sunk on a sea floor in the sea at a position where the base unit is installed, whereby the base unit is fixed at a specific position on the sea floor.

15. A method of installing a block type wave power generation apparatus including: buoyant units moored on the sea by wires to absorb kinetic energy of waves; base units fixing the buoyant units within a predetermined section on the sea; and power generation units converting kinetic energy of the buoyant units into electrical energy, the method comprising:
assembling the base units on a land or on the sea;
carrying the base units on a ship or on the sea to an installation area;
sinking the base units in the sea at the installation area;
fixing the base units on a sea floor at the installation area using weights; and
connecting the buoyant units and the wires to the base units.

16. The method of claim 15, wherein the power generation units are arranged on the land or on a breakwater in proportion to an installation length of the buoyant units.
